Europäisches Patentamt

European Patent Office

Office européen des brevets

(11) Publication number: 0 294 926
A1

## EUROPEAN PATENT APPLICATION

(21) Application number: 88303453.0

(22) Date of filing: 18.04.88

(51) Int. Cl.⁴: F16B 13/12

(30) Priority: 14.05.87 GB 8711360

(43) Date of publication of application:
14.12.88 Bulletin 88/50

(84) Designated Contracting States:
AT BE CH DE ES FR GB GR IT LI LU NL SE

(71) Applicant: TML PLASTICS LIMITED
Temlon Works P.O. Box 22 Exchange Street
Accrington Lancashire BB5 OLA(GB)

(72) Inventor: Russel, Trevor
5 Willaston Avenue
Blacko Nelson Lancashire(GB)
Inventor: Seed, David
24 Nuttall Street
Blackburn Lancashire(GB)

(74) Representative: Lawrence, John Gordon et al
McNeight & Lawrence Regent House Heaton
Lane
Stockport, Cheshire SK4 1BS(GB)

(54) Fixing device.

(57) There is disclosed a fixing device of the kind referred to wherein said plug comprises a tubular barrel (10) having an annular flange (16) at one of its ends and adapted to be passed through a hole in a member to be secured to a surface and into a bore in said surface and means (11) which can be driven into the barrel within said bore to cause the barrel to expand whereby the member is held against said surface by said flange.

FIG. 3

# FIXING DEVICE

This inventions concerns a fixing device of the kind (hereinafter termed of the kind referred to) comprising a plug which can be expanded in a bore to grip the walls of the bore to prevent withdrawal of the plug.

Fixing devices of the kind referred to are primarily, though not exclusively, intended for securing an item, such as a length of timber, to a wall.

There are many types of fixing device of the kind referred to but the most commonly encountered comprises a tubular body of plastics material which can be slid into a blind bore and expanded by the act of screwing a wood screw thereinto, it being understood that such screw passes through the item to be secured against the wall.

Fixing devices of this known kind have a number of disadvantages. Thus the bores in the wall must be located very precisely relative to holes in the item to be secured to ensure firstly that the item is accurately located and secondly to avoid any possibility of the screw forcing itself between the wall of the bore and the outside of the plug. Again, since wood screws are normally of steel there is the likelihood of corrosion and the possibility of staining, particularly in a humid environment.

It is an object of the present invention to provide a fixing device which overcomes the problems aforesaid.

According to the present invention there is provided a fixing device of the kind referred to wherein said plug comprises a tubular barrel having an annular flange at one of its ends and adapted to be passed through a hole in a member to be secured to a surface and into a bore in said surface and means which can be driven into the barrel within said bore to cause the barrel to expand whereby the member is held against said surface by said flange.

The end of the barrel remote from the flange may be divided by axially extending radial slots into a plurality of angularly spaced leaves, there being at least one outwardly directed protrusion on the outer face of each said leaf, the diametric dimension of the plug at said protrusions being greater than the external diameter of said barrel.

The means to be driven into the barrel may comprise a spigot.

The spigot may be connected with the barrel in a position extending outwardly from the end thereof remote from said leaves by a rupturable connection.

The barrel and spigot may be an integral plastics moulding.

The annular flange may be of frusto-conical form.

The invention will be further apparent from the following description, with reference to the several figures of the accompanying drawings, which show, by way of example only, two forms of fixing device embodying same.

Of the drawings:-

Figure 1 shows a perspective view of one form of device;

Figure 2 shows a cross-section through the device of Figure 1;

Figures 3 - 5 show successive stages in the use of the device to secure a wooden batten to a wall;

Figure 6 shows an axial cross-section through a second form of device; and

Figure 7 shows a cross-section through the device of Figure 6 after use to secure a batten to a wall.

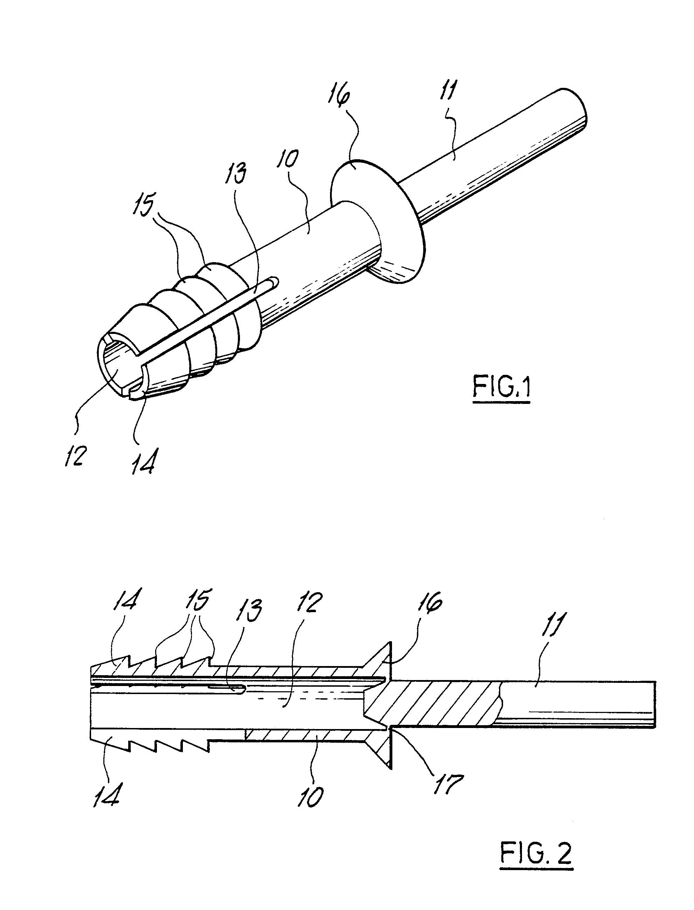

Referring now to Figures 1 and 2 of the drawings, it will be seen that the device, which is an integral plastics moulding comprises a plug in the form of a tubular barrel 10 and a spigot 11 adapted to fit within the bore 12 of the barrel 10.

At the inner end of the barrel 10 are three equiangularly spaced axially extending radial slots 13 to divide the barrel 10 at its inner end into three angularly spaced leaves 14. Each of the leaves 14 is provided with a plurality of outwardly directed wedge-shaped protrusions 15, the diametric dimension of the plug at the position of the protrusions being greater than the external diameter of the barrel 10.

At the end of the barrel 10 opposite the leaves 14 is an annular flange 16 of frusto-conical shape. The spigot 11 extends outwardly from the flange 16 and is connected thereto by a rupturable joint 17.

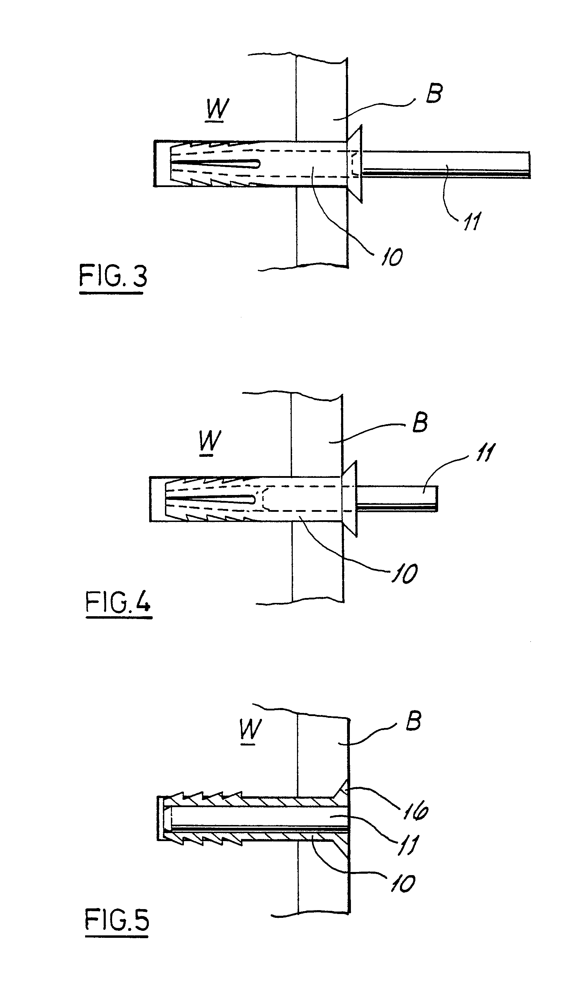

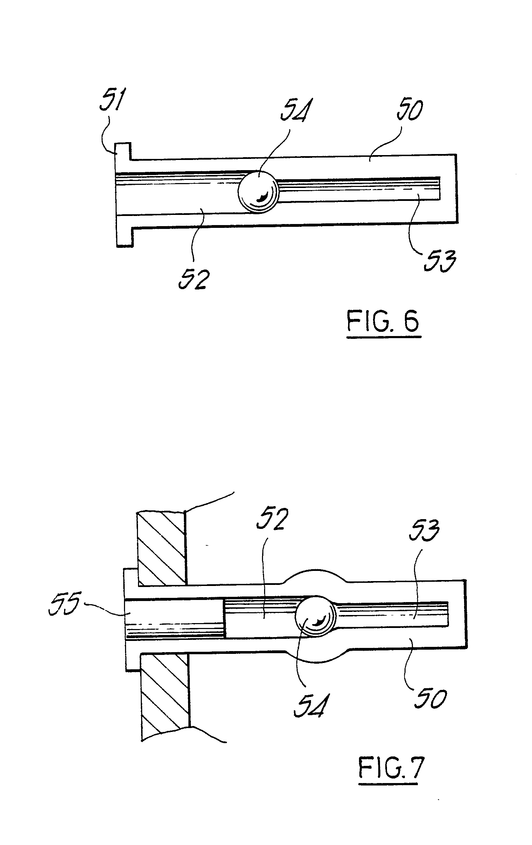

Referring now to Figures 3 - 5, it will be seen that in use a batten B may be located over a wall W to which it is to be secured and a hole is drilled therethrough and into the wall W to form a blind bore therein. The drill is sized so that the barrel 10 of one of the devices is a clearance fit within the bore. The fixing device is pushed through the hole in the batten B and into the blind bore in the wall W (see Figure 3), the leaves 14 being compressed inwardly during this operation. The spigot 11 is then hammered into the bore 12 as shown in Figures 4 and 5 to force the leaves 14 apart and the protrusions 15 into gripping and penetrating engagement with the wall surrounding the bore. The flange 16 is hammered into the face of the batten B so as to be flush therewith and present a neat and tidy appearance.

Once the fixing device has been installed as described, it cannot be removed without drilling away the flange 16.

It will be understood that if additional securement of the batten B is required, further fixing devices can be installed without disturbing those which might already be in place.

Since the holes in the batten B are drilled and extended into the wall W in a single operation, there is no possibility of their being out of register and use of the device is simple, even for the unskilled.

Referring now to Figure 6 and 7, it will be seen that a second form of device comprises a barrel 50 having an annular flange 51 at one end and a stepped bore therein. The outer part 52 of the bore (adjacent the flange 51) is of greater diameter than the inner part 53 of the bore. The barrel 50 houses a ball bearing 54 which is initially located on the step between the bore parts 52 and 53. The ball bearing 54 is an interference fit within the bore part 52, but may be further secured against accidental displacement by adhesive. The barrel 50 is of a readily deformable material such as copper, aluminium or a suitable plastics.

The device is used in a manner similar to that previously described with reference to the device of Figures 1 to 5, the ball bearing 54 being driven using a hammer and a nail or other implement into the bore part 53 to cause outward deformation of the barrel into gripping engagement with the walls of the bore in which it is located (See Figure 7). The open end of bore part 52 may be closed with a dowel 55.

It will be appreciated that it is not intended to limit the invention to the above example only, many variations, such as might readily occur to one skilled in the art, being possible, without departing from the scope thereof as defined by the appended claims.

## Claims

1. A fixing device of the kind referred to wherein said plug comprises a tubular barrel having an annular flange at one of its ends and adapted to be passed through a hole in a member to be secured to a surface and into a bore in said surface and means which can be driven into the barrel within said bore to cause the barrel to expand whereby the member is held against said surface by said flange.

2. A fixing device according to Claim 1, wherein the end of the barrel remote from the flange may be divided by axially extending radial slots into a plurality of angularly spaced leaves, there being at least one outwardly directed protrusion on the outer face of each said leaf, the diametric dimension of the plug at said protrusions being greater than the external diameter of said barrel.

3. A fixing device according to Claim 2, wherein the means to be driven into the barrel comprises a spigot.

4. A fixing device according to Claim 3, wherein said spigot is connected with the barrel in a position extending outwardly from the end thereof remote from said leaves by a rupturable connection.

5. A fixing device according to Claim 4, wherein the barrel and spigot are an integral plastics moudling.

6. A fixing device according to Claim 1, wherein the barrel is formed from a deformable material and has a stepped bore, there being a bore part adjacent the annular flange of greater diameter than a bore part remote from the flange.

7. A fixing device according to Claim 6, wherein the means to be driven into the barrel comprises a ball bearing whose diameter corresponds with that of the bore part of greater diameter.

8. A fixing device according to Claim 1, wherein the annular flange is of frusto-conical form.

FIG.1

FIG. 2

$\underline{W}$

$B$

FIG. 3

10

11

$\underline{W}$

$B$

11

10

FIG.4

$\underline{W}$

$B$

16

11

10

FIG.5

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | EP-A-0 188 173 (HILTI)<br>* figure 1, position 3 *<br>--- | 4,1 | F 16 B 13/12 |
| A | DE-A-1 475 070 (CAMPORESE et al.)<br>* figure 1 *<br>--- | 1,2,6 | |
| A | DE-A-2 552 435 (BERNAUER)<br>* figure 1 *<br>--- | 7 | |
| A | GB-A-1 239 375 (UNIVERSAL ANCHORAGE CO.)<br>* figure 1 *<br>--- | 1,6,8 | |
| A | US-A-3 765 295 (PTAK)<br>* figure 5; abstract *<br>--- | 1,2,4-6 | |
| A | US-A-4 488 843 (ACHILLE)<br>* figure 9 *<br>----- | 1 | |

TECHNICAL FIELDS
SEARCHED (Int. Cl.4)

F 16 B 13/00

The present search report has been drawn up for all claims

| Place of search | Date of completion of the search | Examiner |
|---|---|---|
| BERLIN | 19-09-1988 | ZAPP E |

EPO FORM 1503 03.82 (P0401)